# EUROPEAN PATENT APPLICATION

(11) **EP 2 887 607 A1**
(43) Date of publication of application: **24.06.2015**
(21) Application number: 13306842.9
(22) Date of filing: 23.12.2013
(51) Int. Cl.: H04L 29/06, H04W 4/00, G06F 21/53

(54) **Migration of assets of a trusted execution environment**

(71) Applicant: Orange, 75015 Paris (FR)
(72) Inventor: Ahmad, Zaheer, LONDON, UB25JN (GB); Ahmed, Tansir, ILFORD, IG2 7PL (GB)
(74) Representative: Orian, Yvette Suzanne

(57) **Abstract**

In a method of migrating assets of a trusted execution environment from a source device to a TEE-enabled destination device, in the case where the isolation of trusted applications in the source device is achieved using containers that are personalized to the source device by use of respective keys that are derived, at least in part, from a key unique to the source device, the TEE assets are packed at the source device using a packing trustlet installed on the source device and unpacked at the destination device using an unpacking trustlet installed on the destination device, under the supervision of a trusted TEE-asset migration supervisor. The packing trustlet obtains, from a Trusted Services Manager server associated with its TEE, a public key corresponding to a private key unique to the destination device and encrypts TEE assets using that public key. The encrypted TEE assets are provided to the destination device. The TEE-asset migration supervisor facilitates the supply to the destination device of new containers personalized to the destination device. The destination device installs trustlets in the new containers.

## Description

The present invention relates to the general field of security in relation to software applications. More particularly, the invention relates to methods and devices which manage the migration of assets of a trusted execution environment from a source device to a destination device.

Nowadays users tend to download many, if not most, of the software applications ("apps") that they employ on their devices that have processing capabilities (desktop computers, laptops, mobile telephones, tablets, smart appliances, and so on). Apps are typically downloaded from "app stores" that are accessible via the Internet. Accordingly, device manufacturers tend to provide their products with high level operating systems, for example Android™, Linux™, and so on, that have rich capabilities and are configured to operate in open environments allowing the installation of third party apps.

Many applications involve private, sensitive and/or valuable information which it is desired to handle in a secure manner: for example banking apps, apps which provide premium digital content, apps which allow employees to access an enterprise network, and so on. Device manufacturers are mindful of the need to design their products so that they can be trusted to provide an appropriate level of security even in an open environment.

In this context, proposals have been made to design devices, particularly, mobile devices, so that they have the hardware and/or software that makes them capable of establishing a trusted execution environment (TEE) in which to run software applications that require security. A TEE is a special execution environment in which measures are employed to preserve the security of the applications being run and of the data being handled. Typically the same device is capable of establishing a standard execution environment (for applications and functions that are configured not to require strengthened security) as well as a separate TEE for applications and functions whose security will be particularly protected. It is sometimes said that the device can run applications in the "normal world" (NW) or run secure applications in a "secure world" (SW) provided by the TEE. A device that assures security using a TEE may also, if desired, make use of a secure element (SE), for example a micro SD card, a Universal Integrated Circuit Card (UICC) or an embedded SE. Moreover, a TEE-enabled device can provide security to a region in a remote device (tablet, mobile telephone, etc.), that region being created by virtualization.

A device which is capable of establishing a TEE is said to be "TEE-enabled". Different system architectures can be used but, in one example, a TEE-enabled device may incorporate certain features to ensure security, such as: a secure operating system which is distinct from the standard operating system that establishes the NW execution environment, a secure boot ROM, a secure bus (to maintain secrecy of data going to/from peripherals), a dedicated processor for running the secure OS (or a virtual processor dedicated to this function), a monitoring module for managing switching between NW and SW operation, and so on. A secure system that is TEE-enabled can, for example, be constructed employing the Trustzone™ technology supplied by ARM Limited.

There is also variation in the specific way in which a TEE can be implemented on a device. One approach is to adopt the TEE specifications that have been developed by the organization GlobalPlatform (e.g. the TEE System Architecture v1.0 | GPD_SPE_009, the TEE Client API Specification v1.0 | GPD_SPE_007, and so on).

Various apps that require security may be installed - either by the device manufacturer or by the user - so that they execute in the TEE. Applications to be run in the TEE are called "trusted applications" or "trustlets". In general it is desirable to isolate trustlets from the world outside the device implementing the TEE, so that there cannot be direct communication between the trustlet and entities external to the device. Typically, any required communication is handled by a client app that is associated with the trustlet and is hosted by the OS of the NW.

Furthermore, in general it is necessary to isolate trustlets from one another so that one trustlet cannot perform unauthorized access to secure resources of another trustlet in the same TEE. The necessary isolation of the trustlets is generally achieved with the help of one or more entities which provide a chain of trust extending from device manufacture up to and including installation of the secure applications (trustlets) in the devices.

In one implementation, the necessary chain of trust is established by cooperation between a Trusted Service Manager (TSM) server of the device manufacturer and a Trusted Services Manager (TSM) server, external to the device, but associated with TEE services. The company Trustronic provides the latter type of TSM server associated with TEE services.

This kind of TSM server associated with TEE services may provide "containers" for the trustlets to be installed in the TEE of a compatible TEE-enabled device (this TSM server may be termed a TEE-TSM server). The "containers" achieve isolation of trustlets using encryption, notably making use of encryption keys that are generated taking into account a unique key that is specific to the device in which the container/trustlet is installed and, in this way, the trustlet/container combination is rendered useable only on the device in which it is installed. In order to assure security, the unique key that is specific to a particular device and is the basis for generation of keys for the "containers" may be a key that is associated with (e.g. embedded in) some hardware element of the device, e.g. the chipset, or a key that is specific to the instance of secure operating system that is implemented on this device. The unique key may be a Hardware Unique Key (HUK) associated with the device and assigned during device manufacture. In order to be able to generate container keys that are bound to the HUK (or other unique key) of specific devices, The TEE-TSM communicates with device manufacturers, notably with Trusted Service Manager servers of device manufacturers (i.e. OEM-TSMs) who implement compatible TEEs in their devices, to discover an appropriate key unique to each device.

The TEE-TSM server maintains a directory of public keys that correspond to the HUKs of different TEE-enabled devices. For example, the TEE-TSM may maintain the HUKs of TEE enabled devices and, in the case where the HUKs are thought of as asymmetric keys, then the TEE-TSM and/or OEM-TSM know both the private and public keys.

The TEE-TSM server may use any suitable identifier (for example the device's International Mobile Station Equipment Identity (IMEI)) to uniquely identify TEE-enabled devices in its communications with other entities. A TEE which makes use of trustlet-isolation containers whose keys are bound to the HUK (or other unique key) of the specific device implementing the TEE has high security because the public key corresponding to the HUK is known only to a very small number of trusted entities (notably, the device manufacturer and the TEE-TSM server). Accordingly, third party service providers can rely on such TEEs being trustworthy.

In another implementation, any interested third party can devise his own method of providing such a chain of trust, that starts right from the device manufacturing up to secure installation of applications. An example is a research project idea that can use a hypervisor to remotely verify its integrity (a job the HUK performs to verify the integrity of t-base secure operating system in the TEE), then the verified hypervisor can certify the OS running on top of it and further isolated application security.

Over time, a person who owns and uses a TEE-enabled device will tend to build up assets associated with the TEE, for example: encryption keys, certificates, various trustlets having different types and dependencies (and their containers), secure data associated with running the different trustlets (including secret PINs and other credentials for identification, certification and/or authentication , private or sensitive data, preference data, information about use-history, and so on), security policies, dedicated memory allocations, and so on. Some of these assets will have been acquired from third party service providers or generated in cooperation with such providers; this is notably the case of PINs and other credentials that the service provider may rely on to authenticate the user.

If the user decides to change device, for example to change from an old mobile telephone to a new one, it is desirable to be able to migrate the TEE assets of the old phone to the new phone so that the populated TEE environment that the user enjoyed on the old phone can be reproduced on the new phone and the user can continue to use the services provided by the trustlets in a seamless manner. In particular, it is desirable for the TEE assets to be migrated in a manner which requires very little action by the user.

When a user changes a device that has an element capable of data storage, e.g. a (U)SIM, it is known to migrate contacts, SMSs, and other data from the old device to the new device by ensuring that the data from the old device is stored on the (U)SIM and then installing the (U)SIM in the new device. However this approach is not suitable for transferring the assets of a TEE.

In order to preserve security, especially of assets provided by third party service providers, the assets of a TEE are not freely copyable. Moreover, even if TEE assets could be copied from a source device to a destination device, in the case where the trustlets installed on the source device have been associated with containers that are "personalized" (or bound to) the source device, the copied trustlet would not function on the destination device.

The present invention has been made in the light of the above problems.

Certain embodiments of the invention provide a method of migrating TEE assets from a source device to a destination device, wherein the source device is configured to implement said TEE, and the assets of the TEE of the source device comprise at least one trustlet and associated container, the container being configured to provide isolation for the associated trustlet using at least one key, said key being derived, at least in part, from a key unique to said source device, the method comprising the source device performing the steps of:
receiving an input indicative of an instruction to migrate, from the source device to a trusted-execution-environment-enabled destination device, assets of the TEE including said at least one trustlet and associated container, ;
inputting an identifier uniquely identifying said destination device;
transmitting to a server external to the source device a request including an identifier uniquely identifying said destination device;
receiving from said server an input indicative of a public key corresponding to a key unique to the destination device;
encrypting, by the public key associated with the hardware unique key of the destination device, information of said at least one trustlet and associated container; and
outputting the encrypted information for the destination device.

By virtue of the above migration method performed at the source device it is possible not just to copy trustlets of a source device to a destination device with minimal user input but to render the trustlets operable on the destination device despite the fact that the trustlets had been customized to the source device.

In certain embodiments of the invention the keys unique to the source device and destination device are embedded in hardware of the source device and destination device, respectively. Hardware embedded keys have high security and are known to a very limited number of parties (notably to the device manufacturer). Accordingly, the containers providing isolation for the trustlets are protected using secure keys that are personalized to the devices in which the trustlets are installed.

In some embodiments of the invention the transmitting step involves transmitting the identifier of the source device to a mobile network operator server belonging to/operated by the operator of the mobile network that provides communications to this device. Typically, the mobile network operator already provides secure services to the device and so is trustworthy in relation to providing security to the device.

Certain embodiments of the invention provide a method of migrating TEE assets from a source device to a destination device, wherein the source device is configured to implement said TEE and to run at least one trustlet in said TEE, said trustlet being provided by a service provider and associated with a container, the container being configured to provide isolation for the associated trustlet using at least one key, said key being derived, at least in part, from a key unique to said source device, the method comprising the destination device performing the steps of:
receiving encrypted information generated by the source device, the encrypted information corresponding to assets of the TEE including secure data relating to said at least one trustlet and associated container, said assets being encrypted by a public key corresponding to a key unique to said destination device;
decrypting the received encrypted information using said key unique to the destination device;
discriminating, in the decrypted information, information identifying the service provider associated with said at least one trustlet;
transmitting to a migration-supervisor server external to the destination device a request including an identifier uniquely identifying said service provider;
receiving a new container for association with said at least one trustlet, said new container being personalized to the destination device; and
installing said at least one trustlet in the destination device so that said new container provides isolation for the trustlet.

By virtue of the above migration method implemented in a destination device, it is possible not just to copy trustlets of a source device to a destination device with minimal user input but to render the trustlets operable on the destination device despite the fact that the trustlets had been customized to the source device.

In the latter TEE-asset migration method the step of installing said at least one trustlet may comprise extracting said trustlet from the received encrypted information or obtaining the trustlet in some other way, notably downloading said trustlet from a website.

According to the above-mentioned TEE-asset migration methods, it is possible to create on the destination device a reproduction of the populated TEE environment that the user had enjoyed on the source device: including containers, trustlets, associated historic and preference data, virtual spaces, (U)SIM binding, trusted services and relations to third parties.

Certain embodiments of the invention provide computer programs comprising instructions for performing the above-mentioned methods and recording media bearing such computer programs.

Certain embodiments of the present invention provide a migration supervisor server apparatus for supervising the transfer of TEE assets from a source device to a destination device, the source device being configured to implement said TEE and to run at least one trustlet in said TEE, said trustlet being provided by a service provider and associated with a container, the container being configured to provide isolation for the associated trustlet using at least one key, said key being derived, at least in part, from a key unique to said source device, the TEE-asset migration supervisor server apparatus comprising at least one communications module adapted:
to receive from the destination device a message comprising an identifier uniquely identifying the service provider associated with said at least one trustlet; and
to notify said service provider of an identifier uniquely identifying the destination device...

Further features and advantages of embodiments of the present invention will become apparent from the following description of said embodiments, which is given by way of illustration and not limitation, illustrated by the accompanying drawings, in which:
Fig.1 is a diagram schematically representing components of an example TEE-enabled device and its operating context;
Fig.2 is a diagram illustrating interactions occurring at a source device during a packing phase of a TEE-asset migration method according to an embodiment of the invention;
Fig.3 is a flow diagram illustrating the steps of the packing process of Fig.2;
Fig.4 illustrates an example format of packetized TEE-asset data usable in the example method of Figs.2 and 3;
Fig.5 is a diagram illustrating interactions occurring at a destination device during an unpacking phase of a TEE-migration method according to an embodiment of the invention;
Fig.6 is a flow diagram illustrating the steps of the unpacking process of Fig.5; and
Fig.7 is a block diagram illustrating components of an example migration supervisor server according to an embodiment of the invention.

Before describing embodiments of the present invention it is helpful to define some expressions that will be used below:
HUK (Hardware Unique key): this is a key that is randomly generated for each device by the manufacturer and is unique to the device. The HUK is symmetric. The HUK is used for deriving keys usable in encryption/decryption of trustlets.
TSM (Trusted Services Manager): this is an entity (typically implemented using a server) which manages certificates and keys in connection with the provision of trusted services.

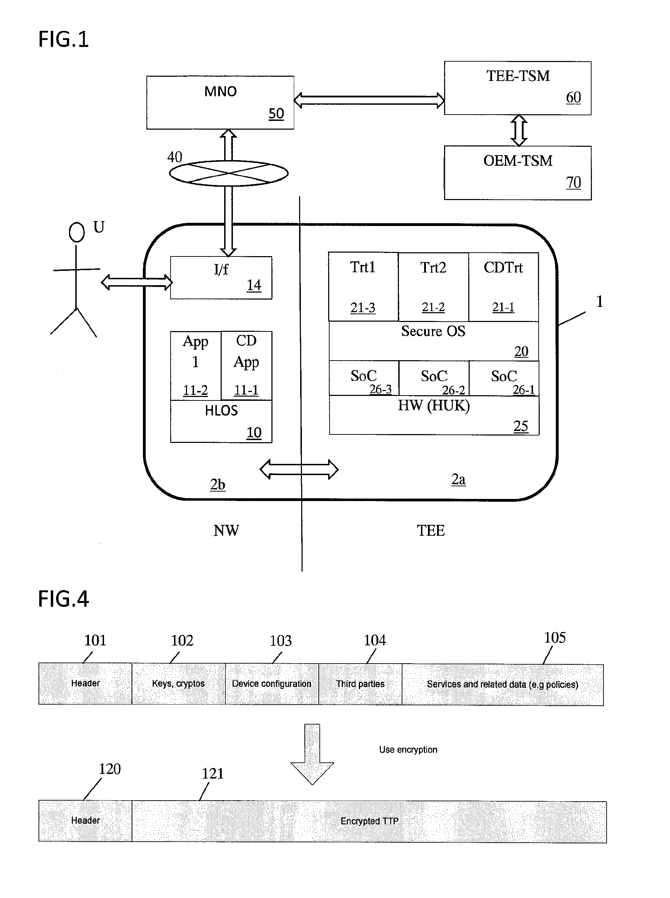

Example implementations of methods according to embodiments of the invention will now be described with reference to Figs.1 to 6. Below, an example implementation of a TEE-asset migration method will be described in which the source device whose TEE assets are to be transferred and the destination device which is to receive the transferred TEE assets are both mobile phones. However, it should be mentioned that the source and destination devices could be any other desired types of device capable of implementing a TEE. Moreover, the source and destination devices may be of different kinds, for example, the source device may be a tablet whereas the destination device may be a mobile phone, provided that the trustlet applications that run on the source device are compatible to run on the destination device.

Fig.1 is a diagram that illustrates schematically a mobile phone device 1 configured to provide a TEE. Conceptually, the mobile phone 1 may be considered to have components 2a belonging to the secure world SW and components 2b belonging to the normal world NW. In practice, common hardware may be used to implement elements of the components 2a and 2b. In this implementation example, the secure world components include the device's hardware unique key (HUK), a private key, stored at a secure location 25. In this example there are also three System-on-Chip modules 26-1, 26-2 and 26-3 and a secure operating system 20.

In the implementation example shown in Fig.1, the normal world components include a high-level operating system (HLOS) 10, e.g. Android™, and an interface module 14 enabling communication between the normal world components 2b and a user U, and communication via a network 40. In this example the network 40 is managed by a mobile network operator (MNO) 50 which, in this implementation, performs the role of a trusted migration supervisor. The MNO in its turn can communicate with a Trusted Service Manager server 60 associated with TEEs of the type implemented on the mobile phone 1. The TEE-TSM 60 is configured for communication with a Trusted Service Manager server 70 of the manufacturer of the mobile phone 1. It is not essential for the TEE-TSM 60 to have the capability to communicate continuously with the OEM-TSM 70 as long as sufficient communication occurs for the TEE-TSM 60 to learn the public key corresponding to the HUK for the device 1 (and for the destination device discussed below).

In the example illustrated in Fig.1, three trustlets are installed in the mobile phone 1 and run in the TEE. There is a highly-secured trustlet 21-1 for managing aspects of the migration of TEE assets from the mobile phone 1, notably when the user changes devices; thus this trustlet shall be referred to as a "Change device" trustlet. In this example there are also two other trustlets 21-2 and 21-3 which run in the TEE. Further, in this example various "normal world" apps are installed in the mobile phone 1, including a NW "Change Device" client application 11-1 associated with the "Change Device" trustlet 21-1, and another app 11-2. Although not specifically shown in the figures, each of the trustlets 21-1 to 21-3 is associated with a respective container that is provided for it by the TEE-TSM 60. Each container isolates its trustlet from unauthorized access, and is personalized to the device 1 (e.g. an encryption key associated with the container may be derived from a unique key that is associated with the device 1, such as the HUK of device 1). In the example illustrated in Fig.1 the TEE-TSM provides, to service providers who offer trustlets, containers that are personalized to different devices and the service providers' TSMs function to cause installation of the trustlets in the relevant devices using the appropriate containers, and the containers installed in the devices are also personalized to the service provider who offered the relevant trustlet.

The Change Device trustlet 21-1 and its associated NW app 11-1 are configured to implement steps of a method for migrating assets of the mobile phone's TEE, notably when the user changes device. The assets to be transferred may relate to a populated TEE having a very complex configuration and the assets may include sensitive items of data stored in dedicated spaces in the TEE as well as perhaps in the device's (U)SIM or REE (Real Execution Environment). Accordingly, it is appropriate for the transfer to be implemented using a secure application (i.e. a trustlet) that is installed in the source device so as to run in the TEE. Moreover, because the trustlet 21-1 involved in TEE-asset migration will generally have access to secure resources of other trustlets it is appropriate to provide it with a high level of authorization within the TEE.

The special privileges of the Change Device trustlet 21-1, that enable it to access other trustlets, may be provided in any convenient manner. For example, embedded in the program there may be a script or list of tasks which query the operating system (OS) to provide privileged information, similarly to the case where a program normally sends request to OS kernel service for specific data in general. The security policy of the kernel controls what information can be provided. In this implementation it will be a service running at application level but having privilege of kernel level.

Description now follows of a first embodiment of method for migrating TEE assets from the mobile phone 1 illustrated in Fig.1 (the source device) to a new TEE-enabled mobile phone 1a (the destination device) when the user decides to change devices. This method involves the packing of TEE assets at the source device and the unpacking of TEE assets at the destination device, under the supervision of a trusted entity (which may be designated a TEE-migration supervisor) that is external to the source and destination devices. The TEE-migration supervisor may, for example, be implemented by the mobile network operator 50. Such an approach has the advantage that the MNO 50 knows (or is in a position to know) the identity of the device owner. Moreover, because it is likely that the MNO probably already provides secure over-the-air services to its customers, the MNO is liable to be considered by third party service providers to be a party who can be trusted to handle the shifting of secure data without a breakdown in trust (i.e. without a breakdown in confidence in the confidentiality and integrity of the secure data). Moreover, the MNO 50 may benefit from secure communications links with the TEE-TSM. Thus, the security of the TEE-migration process is enhanced.

Before implementation of the TEE-asset migration process appropriate migration-management trustlets (and associated NW applications) are installed in the source and destination devices. A TEE-asset packing trustlet (and associated application) may be installed in the source device and a complementary TEE-asset unpacking trustlet (and associated application) may be installed in the destination device. Alternatively, a single trustlet (and associated application) capable of performing both packing and unpacking may be installed. In this example the packing and unpacking trustlets/applications are provided to the user by the TEE-migration supervisor (here, the mobile network operator) e.g. via its app store and, before installation, the installing device checks a certificate associated with the relevant trustlet. It is not essential for the migration-management trustlets to be provided by the TEE-migration supervisor/MNO. In one variant they are pre-installed by the device manufacturer.

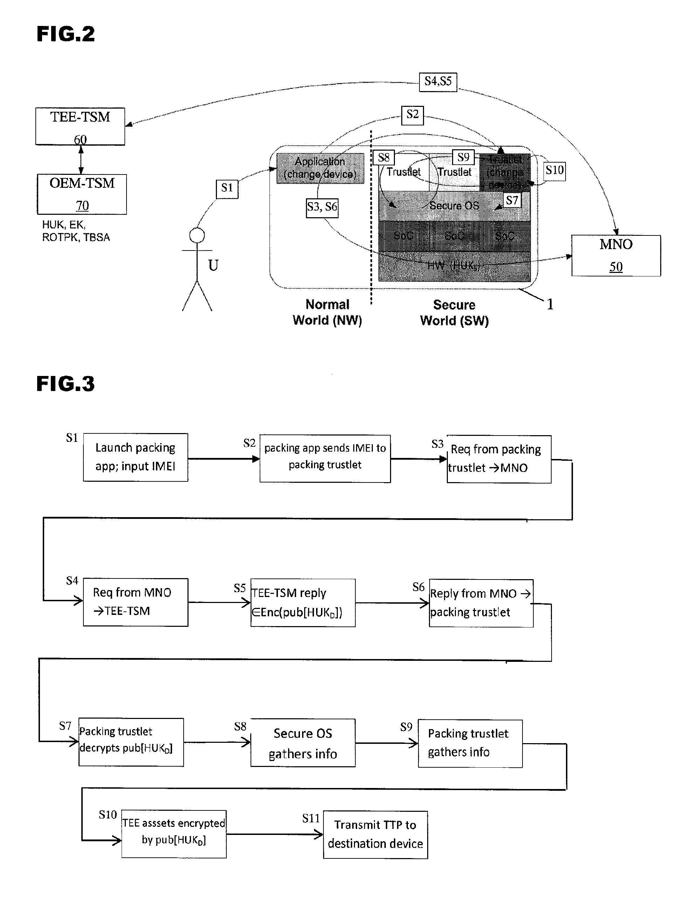

Fig.2 is a diagram illustrating a source device having the same general configuration as the mobile phone 1 illustrated in Fig.1. The hardware unique key of this source device shall be designated HUK_{S}. (Likewise, below the hardware unique key of the destination device shall be designated HUK_{D}). Labelled arrows marked on Fig.2 illustrate various interactions that take place during implementation of the packing phase of the TEE-asset migration method according to this example. Fig.3 is a flow diagram illustrating steps in the packing process.

As illustrated in Fig.3, the TEE-asset packing process begins in step S1 when the user launches the "Change device" app 11-1 in the Normal World (NW). In view of the sensitive nature of the TEE assets, in this example the launching of the Change Device app 11-1 requires the user to make an authentication input (e.g. enter a PIN, provide biometric data, etc.) matching a parameter that was set at the time of installation of the migration-management software. Also at this stage, an identifier is input to the source device, for example by the user, to uniquely identify the destination device. Any convenient identifier may be used, e.g. the IMEI of the destination device.

In step S2 the "Change device" application 11-1 in the NW communicates with the "Change device" trustlet 21-1 in the Secure World (SW). The "Change Device" application 11-1 forwards the identifier of the destination device to the "Change Device" trustlet 21-1.

In step S3 the "Change Device" trustlet 21-1 sends a request, Req, to the mobile network operator 50 (or other TEE-migration supervisor) to find out the public key corresponding to the HUK (Hardware Unique Key) of the destination device HUK_{D} (private key). The request message is encrypted using the public key corresponding to the HUK of the source device, HUK_{S} (private key). Because the "Change Device" trustlet 21-1 cannot communicate with the world outside device 1 directly, for security reasons, it sends the request via the "Change Device" application 11-1 in the NW.

In Step S4 the mobile network operator 50 forwards the request message to the TEE-TSM 60 (or to the TSM of the provider of the secure OS if that entity is managing licensed keys for containers), on behalf of the "Change Device" trustlet 21-1. In this example implementation the TEE-TSM 60 is responsible for managing all the certificates and keys assigned to devices having a compatible TEE. TEE-TSM 60 has a link to the OEM-TSM server 70, and therefore has knowledge of the identifier (e.g. IMEI) of a particular device and can easily link the identifier to the public key corresponding to this device's HUK.

In Step S5, the TEE-TSM server 60 receives the encrypted request and decrypts it using the public key corresponding to HUK_{S} of the source device. Using the IMEI sent within the request message, or other included identifier that uniquely identifies the destination device, the TEE-TSM server 60 retrieves the public key which corresponds to private key HUK_{D} of the destination device. The TEE-TSM server 60 then inserts the public key which corresponds to private key HUK_{D} into a response message and encrypts the response message using the public key corresponding to HUK_{S} of the source device. The response message is then sent to the mobile network operator 50 (or other TEE-migration supervisor).

In Step S6 the mobile network operator 50 forwards the encrypted response message to the "Change Device" trustlet 21-1 via the "Change Device" application 11-1.

In Step S7 the "Change Device" trustlet 21-1 decrypts the response message using the private key HUK_{S} and retrieves the public key corresponding to HUK_{D} of the destination device. The "Change Device" trustlet 21-1 then prompts the secure OS 20 to provide information about all the containers and corresponding trustlets currently installed in the source device.

The secure OS 20 maintains information about all the containers and trustlets that are currently installed within the source device. In Step S8, the secure OS gathers the information and stores it in a secure location of the Secure World (notably in a memory space allocated for the "Change Device" trustlet 21-1). For additional security, this information may be encrypted using the public key corresponding to HUK_{D} before it is stored. In the present example implementation the secure OS provides, to the Change Device trustlet 21-1, information about which containers are present, as well as the trustlets running inside each container.

In Step S9 the "Change Device" trustlet 21-1 communicates with all the other trustlets currently installed within the source device. Trustlets cannot communicate with each other due to security reasons, so a service in the secure OS 20 is configured to allow the query to take place in the present instance on behalf of this specific 'Change Device' trustlet. The "Change Device" trustlet 21-1 extracts other information about the trustlets, e.g. their dependencies (i.e. what program in NW runs under co-operation or control of a trustlet), their saved data (PIN, certificates, etc.), identification of the service/application providers, their configuration, policies, etc., from the information provided by the secure OS service. It will be understood that, in view of the privilege given to the "Change Device" trustlet 21-1, it is potentially highly sensitive and therefore needs extra protection and security compared to other trustlets. This extra security may be provided by any convenient method including, but not limited to, double factor authentication to verify the user in the first place, and then dedicated secret PIN/certificate that only the secure OS/or MNO knows (to verify that the request is coming from a 'genuine' Change Device trustlet).

In Step S10 the "Change Device" trustlet 21-1 retrieves from its allocated memory space the information collected by the secure OS 20 and adds it to its own collected information. Finally, the "Change Device" trustlet 21-encrypts the aggregated data using the public key corresponding to HUK_{D}. and packetizes the encrypted data.

In Step S11 the packetized information is transferred from the source device to the destination device via a secured wireless link (WiFi, Bluetooth or any contactless technology). However, it is to be understood that the invention is not limited to use of a wireless transmission mode for transmitting the packetized information from the source device to the destination device, other techniques may be used. For example, in one variant a wired transmission technique is used, and in another variant the packetized information is provided on a physical support that is transferred from the source device to the destination device (e.g. the (U)SIM).

The specific format in which the information is packetized is not critical to the success of the method. An example structure of a TEE Transfer Packet (TTP) is shown in Fig. 4.

As shown in Fig.4, the information that is aggregated for packetizing may include, for example, any desired header data 101, encryption keys and cryptographic elements 102, information 103 regarding the configuration of the device, notably the configuration of TEE assets, information 104 regarding the third parties associated with the various trustlets, and information 105 relating to the services provided by the trustlets (and related data, e.g. policies associated with provision of each service).

According to the example of Fig.4, each TTP has its own header portion 120. The header contains the information about the contents of the packet such as how many sub packets are wrapped inside the main TTP. A data part 121 of the TTP contains the encrypted information.

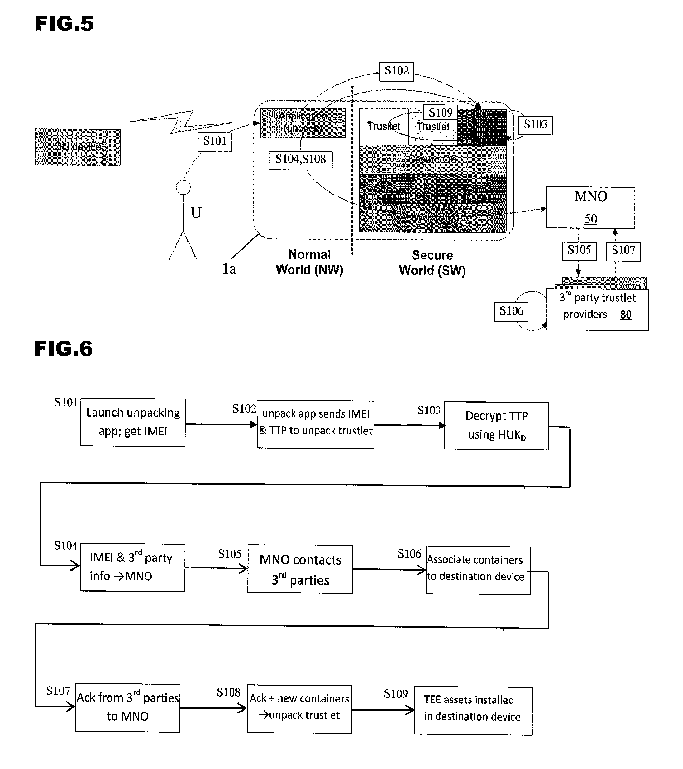

As indicated above, TEE-asset migration methods according to the invention include an unpacking phase to unpack the transferred TEE assets and install them at the destination device so that they will function there. Fig.5 is a diagram illustrating a TEE-enabled destination device 1a to which the user wishes TEE assets to be transferred from the source device 1. The user desires that, after the transfer, the destination device 1a will having the same general configuration of TEE assets as the mobile phone 1 illustrated in Fig.1. Labelled arrows marked on Fig.5 illustrate various interactions that take place during implementation of the unpacking phase of the TEE-asset migration method according to this example. Fig.6 is a flow diagram illustrating steps in the unpacking process.

As illustrated in Fig.6, the TEE-asset unpacking process begins in step S101 when the user launches the unpacking application in the NW and enters his PIN or other authentication element. (As an alternative, if the user's (U)SIM card has been used as a support bearing the packetized TEE-asset information from the source device the user may insert the (U)SIM card from the source device into the destination device and then launch the unpacking application). The unpacking application establishes a secured wireless link with the source device to receive the packetized information (or it copies the information directly from the (U)SIM card, if the (U)SIM card is used instead). The unpacking application retrieves the identifier (e.g. IMEI) of the destination device (or it can be manually entered by the user).

In Step 102 the unpacking application in the NW of the destination device communicates with the associated unpacking trustlet in the SW of the destination device. The unpacking application forwards the IMEI or other identifier of the destination device to the unpacking trustlet along with the received encrypted TTP packet.

In Step 103 the unpacking trustlet unpacks/decrypts the TTP packet using the private key HUK_{D} of the destination device.

In Step S104 the unpacking trustlet forwards to the mobile network operator 50 (or other TEE-asset migration supervisor), via the NW unpacking application, the IMEI (or other identifier of the destination device) as well as the container information of all 3^{rd} parties and dependent trustlets. The container information will include, at a minimum, an identifier of the trustlet's service provider: according to the implementation the mobile network operator 50 (or other TEE-asset migration supervisor, will know both the source and destination devices when starting the process of shifting TEE assets. The source device identity information can also be inferred from the data sent by packing application. The container information sent by the unpacking trustlet may include some or all of the items in the following non-exhaustive list: the container keys applicable for the trustlets when they were installed in the source device, an identifier of each service provider, the number of trustlets in each container according to the configuration in the source device, the number of containers for each service provider as per the configuration of the TEE of the source device, identifiers of entities under the control of each container/trustlet, dates for certificates and so forth.

In Step S105 the mobile network operator 50 communicates with all the 3^{rd} party trustlet providers and forwards to them the IMEI (or other unique identifier) of the destination device. The third party service providers can then retrieve any necessary information from their TSM, using the IMEI (or other identifier) of the device in question. In the case of sensitive information this can be obtained by the MNO 50 (or other TEE-asset migration supervisor) from the Change Device trustlet and forwarded to the third party service provider on demand.

In Step S106 the 3^{rd} party container owners determine, based on the contact from the mobile network operator 50, that now their trustlets will be installed and run in a new device, namely the destination device. They update their databases with the destination device's IMEI (or other identifier), and associate the container to the destination device. The updating process may involve, for example, the revoking of the old container keys and the issuance of a new set of keys configured for the new device, notably issuance of new container keys by the TEE-TSM and supply of the new container keys to the destination device via the TEE-TSM, service provider and/or MNO-TSM. Known methods of database operation in the TSMs may be used for this purpose.

In Step S107 the 3^{rd} party trustlet providers send the mobile network operator an acknowledgement confirming that they have performed the relevant update of their database.

In Step S108 the mobile network operator 50 forwards the acknowledgements from the 3^{rd} parties to the unpacking trustlet (via the unpacking application in the NW), along with container information, e.g. provided by the relevant third party service provider or TEE-TSM, that is adapted to the destination device.

In Step S109 the unpacking trustlet initiates re-installation of the source device's trustlets in the destination device, and restores the data for the respective trustlets.

If, during the unpacking process, any 3^{rd} party trustlet provider does not transmit the prescribed acknowledgement that it has registered the device change, the corresponding 3^{rd} party trustlet is not installed in the destination device. In such a case the user has to manually re-install the corresponding trustlet.

As indicated above, from the point of view of user convenience it is advantageous for the transferred assets to consist of secure data that is associated with running the trustlets and which has been built up in the source device, for example: secret PINs and other credentials for identification, certification and/or authentication , private or sensitive data, preference data, information about use-history, and so on. However, although in the above example implementation the trustlets themselves form part of the TEE assets that are transferred from the source device to the destination device, this is not an essential feature of the invention. As an alternative, in step S109, the unpacking trustlet may instruct the NW unpack program to go a third party's secure webstore and download the trustlet (s) (e.g. via a 3G network).

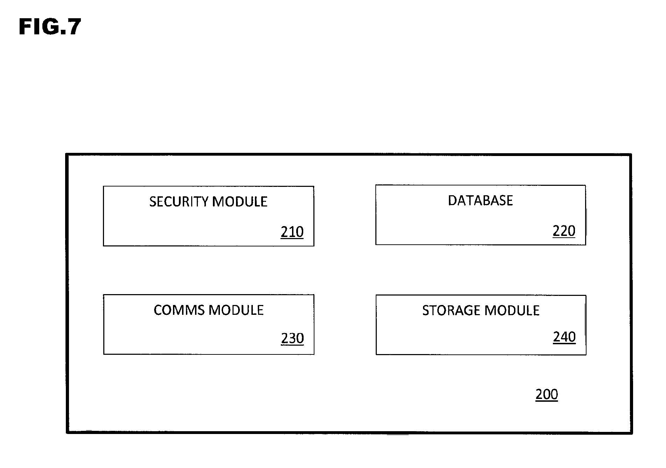

Fig.7 is a block diagram showing certain functional modules that may be present in a server apparatus 200 embodying the TEE-asset migration supervisor 50 of Figs.2 and 5.

The migration-supervisor server 200 comprises a security module 210 for ensuring security for the TEE-asset shift process, e.g. certificates for verification of the packing and unpacking programs, PIN verification, and so forth. There is also provided a database 220 storing details of TEE-enabled devices, notably TEE-enabled devices that are registered with this migration-supervisor server 200. The migration-supervisor server 200 further comprises a communications module 230 configured to handle communications with the TEE-enabled devices, third party service providers, TEE-TSM and so forth, as required, using any convenient communication technology. There is also provided a storage module 240 for storing software required for implementation of the TEE-asset migration process, updates, maintenance, handling registration of TEEs and processing acknowledgements.

Although the invention has been described with reference to certain specific embodiments it is to be understood that various modifications and improvements can be made without departing from the scope of the invention as defined in the appended claims.

For example, although the example implementations described above involve the case where container keys are personalized to a specific device through the use of at least one key that is derived using the hardware unique key (HUK) of that specific device, it is not essential to use the HUK, another secure key that is unique to the device may be used, notably a key that is installed to the device by its manufacturer.

As another example, although in an example implementation described above a (U)SIM is used to transport packaged TEE data from a source device to a destination device it will be understood that other substrates carrying the packaged TEE data may be used.

## Claims

1. A method of migrating assets of a trusted execution environment (TEE) from a source device to a destination device, wherein the source device is configured to implement said TEE and to run at least one trustlet in said TEE, said trustlet being provided by a service provider and associated with a container, the container being configured to provide isolation for the associated trustlet using at least one key, said key being derived, at least in part, from a key unique to said source device, the method comprising the destination device performing the steps of:
receiving encrypted information generated by the source device, the encrypted information corresponding to assets of the TEE including secure data relating to said at least one trustlet and associated container, said assets being encrypted by a public key corresponding to a key unique to said destination device;
decrypting the received encrypted information using said key unique to the destination device;
discriminating, in the decrypted information, information identifying the service provider associated with said at least one trustlet;
transmitting to a migration-supervisor server external to the destination device a request including an identifier uniquely identifying said service provider;
receiving a new container for association with said at least one trustlet, said new container being personalized to the destination device; and
installing said at least one trustlet in the destination device so that said new container provides isolation for the trustlet.

2. The TEE-asset migration method according to claim 1, wherein the step of installing said at least one trustlet comprises extracting said trustlet from the received encrypted information.

3. The TEE-asset migration method according to claim 2, wherein the step of installing said at least one trustlet comprises downloading said trustlet from a website.

4. The TEE-asset migration method according to any of claims 1 to 3, wherein the step of receiving a new container for association with said at least one trustlet comprises receiving a new container from said migration supervisor server.

5. A computer program comprising instructions for performing the TEE-asset migration method according to any one of claims 1-4, when said program is executed by a processor.

6. A recording medium bearing a computer program according to claim 5.

7. A method of migrating assets of a trusted execution environment (TEE) from a source device to a destination device, wherein the source device is configured to implement said TEE, and the assets of the TEE of the source device comprise at least one trustlet and associated container, the container being configured to provide isolation for the associated trustlet using at least one key, said key being derived, at least in part, from a key unique to said source device, the method comprising the source device performing the steps of:
receiving an input indicative of an instruction to migrate, from the source device to a trusted-execution-environment-enabled destination device, assets of the TEE including said at least one trustlet and associated container;
inputting an identifier uniquely identifying said destination device;
transmitting to a server external to the source device a request including an identifier uniquely identifying said destination device;
receiving from said server an input indicative of a public key corresponding to a key unique to the destination device;
encrypting, by the public key associated with the hardware unique key of the destination device, information of said at least one trustlet and associated container; and
outputting the encrypted information for the destination device.

8. The TEE-asset migration method according to claim 7, wherein said key unique to the source device and said key unique to the destination device are keys that are embedded in hardware of the respective devices.

9. The TEE-asset migration method according to claim 7, wherein the transmitting step comprises transmitting said request to a mobile network operator server of a mobile network via which the source device is configured to communicate.

10. A computer program comprising instructions for performing the TEE-asset migration method according to any one of claims 7-9, when said program is executed by a processor.

11. A recording medium bearing a computer program according to claim 10.

12. A TEE-asset migration supervisor server apparatus for supervising the transfer of TEE assets from a source device to a destination device, the source device being configured to implement said TEE and to run at least one trustlet in said TEE, said trustlet being provided by a service provider and associated with a container, the container being configured to provide isolation for the associated trustlet using at least one key, said key being derived, at least in part, from a key unique to said source device, the TEE-asset migration supervisor server apparatus comprising at least one communications module adapted:
to receive from the destination device a message comprising an identifier uniquely identifying the service provider associated with said at least one trustlet; and
to notify said service provider of an identifier uniquely identifying the destination device..

13. A TEE-asset migration supervisor server apparatus according to claim 12, wherein said at least one communication module is adapted to transmit to the destination device new container information for said at least one trustlet.

14. A TEE-asset migration supervisor server apparatus according to claim 12 or 13, and comprising a module adapted to monitor reception from said service providers of an acknowledgement of said notification.

15. A TEE-asset migration supervisor server apparatus according to claim 12, 13 or 14, wherein said server apparatus is a mobile network operator server apparatus.
